# EUROPEAN PATENT APPLICATION

(11) **EP 4 782 095 A1**
(43) Date of publication of application: **29.07.2026**
(21) Application number: 25878446.1
(22) Date of filing: 30.10.2025
(51) Int. Cl.: B01D 53/62, B01D 53/88, B01D 53/90, B01D 53/32

(54) **METHOD FOR FIXING CARBON DIOXIDE IN EXHAUST GAS, PLASMA CATALYST GENERATING APPARATUS FOR COLLECTION OF CARBON DIOXIDE IN EXHAUST GAS, AND APPARATUS COMPRISING SAME FOR FIXING CARBON DIOXIDE IN EXHAUST GAS**

(30) Priority: 12.11.2024 KR 20240159950
(71) Applicant: Korea Institute of Fusion Energy, Daejeon 34133 (KR)
(72) Inventor: SHIN, Dong Hun, Gunsan-si, Jeonbuk-do 54087 (KR); HONG, Yong Cheol, Goyang-si, Gyeonggi-do 10321 (KR); CHUN, Se Min, Gunsan-si, Jeonbuk-do 54086 (KR); YANG, Geon Woo, Gunsan-si, Jeonbuk-do 54139 (KR)
(74) Representative: Fink Numrich Patentanwälte PartmbB
(86) International application number: PCT/KR2025/017568
(87) International publication number: WO 2026/106194

(57) **Abstract**

A method for fixing carbon dioxide in exhaust gas, a plasma catalyst generating device for capturing carbon dioxide in exhaust gas, and a device for fixing carbon dioxide in exhaust gas comprising the same are provided. The method for fixing carbon dioxide in exhaust gas comprises: a first step of injecting an alkali metal compound into a plasma to form a plasma catalyst; and a second step of discharging the plasma catalyst into an exhaust gas containing carbon dioxide to capture the carbon dioxide in the exhaust gas.

## Description

### FIELD

The present disclosure relates to a method for fixing carbon dioxide in exhaust gas, a plasma catalyst generating device for capturing carbon dioxide in exhaust gas, and a device for fixing carbon dioxide in exhaust gas comprising the same, and more particularly, to a method and device for fixing carbon dioxide contained in a large-volume exhaust gas from a marine engine or the like.

### DESCRIPTION OF RELATED ART

Carbon dioxide in exhaust gas is known as a major greenhouse gas that causes environmental problems such as global warming, and there is a need for technologies to effectively reduce it. One of the existing carbon dioxide reduction technologies is a method of capturing and removing carbon dioxide through a catalytic reaction. This method fixes carbon dioxide by passing exhaust gas through a catalytic reactor, and is generally suitable for processing a small volume of exhaust gas, but has limitations in processing a large-volume exhaust gas from a marine engine or the like. In addition, since existing catalytic systems consume a large amount of energy to raise the temperature of the reaction unit, they have low energy efficiency and difficulty in large-scale application.

### DISCLOSURE

### TECHNICAL PURPOSE

The present disclosure seeks to provide a technology capable of efficiently fixing carbon dioxide even in a large-volume exhaust gas by overcoming the limitations of existing carbon dioxide fixing methods. To this end, a plasma catalyst injection device is developed that reduces carbon dioxide by combining plasma technology with an alkali metal compound catalyst. The present disclosure aims to efficiently remove carbon dioxide from large-volume exhaust gas and minimize energy consumption by reacting carbon dioxide contained in exhaust gas with an alkali metal compound activated in a plasma state.

### TECHNICAL SOLUTION

In one aspect, the present disclosure provides a method for fixing carbon dioxide in exhaust gas, the method comprising: a first step of injecting an alkali metal compound into a plasma to form a plasma catalyst; and a second step of discharging the plasma catalyst into an exhaust gas containing carbon dioxide to capture the carbon dioxide in the exhaust gas.

As used herein, the term "alkali metal compound" refers to, as a non-limiting example, a compound comprising an alkali metal of Group 1, such as sodium and potassium. The alkali metal compound serves to capture and fix carbon dioxide in exhaust gas.

As used herein, the term "plasma catalyst" comprises the alkali metal compound activated in a plasma state, which reacts with carbon dioxide in exhaust gas and is converted into a carbonate compound or a bicarbonate compound, thereby helping to reduce carbon dioxide in exhaust gas.

In some embodiments, the plasma is a microwave plasma torch in which a plasma source gas is injected into a discharge tube penetrating a microwave waveguide to generate a plasma discharge.

In some embodiments, the alkali metal compound is supplied in the form of a powder or an aqueous solution of a solid-phase or liquid-phase alkali metal compound.

In some embodiments, the alkali metal compound is an alkali metal hydroxide. In this case, since the product becomes water, it is highly eco-friendly, and the hydroxide is easily dissolved in water into hydroxide ions and alkali metal ions, which has the advantage of being able to induce a neutralization reaction by supplying it as an aqueous solution to acidic wastewater generated from a scrubber.

In some embodiments, the alkali metal hydroxide is at least one solid or aqueous solution selected from the group consisting of NaOH and KOH.

In some embodiments, the injection of the alkali metal compound is configured to be injected through a carrier gas. In some embodiments, the carrier gas is steam. When injecting the alkali metal compound, it can be strongly injected with high-pressure steam to penetrate into the interior of the plasma.

In some embodiments, the plasma is a plasma of a plasma source gas comprising steam (H₂O). In the case of a steam plasma, substances such as OH, H*, and O* that can serve as catalysts are present at a density more than 10 times higher than that of existing gasifiers. In addition, it can prevent the ionized alkali metal compound from recombining and induce conversion to H₂O through the generation of additional molecules such as H and O.

In some embodiments, the plasma source gas further comprises oxygen (O₂). In the case of an oxygen plasma, steam may be further added to prevent the ionized alkali metal compound from recombining and to induce conversion to H₂O through the generation of additional molecules such as H and O.

Steam may be additionally supplied to the exhaust gas containing carbon dioxide depending on the volume of the exhaust gas or the concentration of CO₂. This can help improve the reactivity of fixing carbon dioxide by generating more OH radicals. In addition, the additionally supplied steam has an advantage when using a solid-phase catalyst. This is because a liquid-phase catalyst is dissolved in water, and thus the aqueous solution itself can serve as steam.

In some embodiments, in the second step, a compound comprising a bicarbonate compound or a carbonate compound is formed. The compound comprising the bicarbonate compound or the carbonate compound is a byproduct generated as a result of mixing and reacting the plasma catalyst with the exhaust gas containing carbon dioxide, whereby carbon dioxide in the exhaust gas can be fixed to reduce the concentration of carbon dioxide in the exhaust gas. In addition to the compound comprising the bicarbonate compound or the carbonate compound, H₂O may also be formed.

In some embodiments, the bicarbonate compound or the carbonate compound may be at least one selected from the group consisting of NaHCO₃, Na₂CO₃, KHCO₃, and K₂CO₃.

In some embodiments, the method fixes carbon dioxide contained in a large-volume exhaust gas from a marine engine or the like. In existing catalytic methods, exhaust gas containing carbon dioxide is passed through a catalytic reactor to fix the carbon dioxide to the catalyst, and in this process, a large amount of electrical energy is consumed to raise the temperature of the catalytic reaction unit for catalyst activation. The existing methods are feasible when the volume of exhaust gas is small, but are very difficult to apply to large-volume exhaust gas from a marine engine or the like. The present disclosure has the advantage of being applicable to large-volume exhaust gas from a marine engine or the like having a minimum exhaust gas volume of about 100,000 Nm³/hr by the method described above.

In another aspect, the present disclosure provides a plasma catalyst generating device for capturing carbon dioxide in exhaust gas, the device comprising: a microwave waveguide configured to transmit microwaves; a quartz discharge tube penetrating the microwave waveguide, the quartz discharge tube comprising a discharge outlet configured to form a plasma by the microwaves and to discharge a plasma torch; a discharge gas injection unit configured to inject a plasma discharge gas into the quartz discharge tube, wherein the quartz discharge tube comprises a discharge outlet side on which the discharge outlet is located and a discharge gas injection side opposite to the discharge outlet with the microwave waveguide therebetween, and the discharge gas injection unit is located on the discharge gas injection side; and an alkali metal compound injection unit located on the discharge outlet side and configured to inject an alkali metal compound into the plasma.

In some embodiments, the plasma source gas comprises at least one of steam (H₂O) and oxygen.

In some embodiments, the alkali metal compound injection unit comprises a carrier gas injection line and an alkali metal compound injection line branched from the carrier gas injection line, so as to inject the alkali metal compound through a carrier gas.

In some embodiments, the carrier gas is steam. When injecting the alkali metal compound, it can be strongly injected with high-pressure steam to penetrate into the interior of the plasma.

In some embodiments, at least one additional gas supply unit is provided on the discharge outlet side, the additional gas supply unit being configured to supply a gas comprising steam to the plasma through the quartz discharge tube. This helps fix carbon dioxide by generating more OH radicals.

In yet another aspect, the present disclosure provides a device for fixing carbon dioxide in exhaust gas, the device comprising: an exhaust gas duct through which an exhaust gas containing carbon dioxide passes; and the plasma catalyst generating device for capturing carbon dioxide in exhaust gas as described above, wherein the discharge outlet penetrates the exhaust gas duct.

In some embodiments, the device for fixing carbon dioxide in exhaust gas comprises two or more plasma catalyst generating devices, and the two or more plasma catalyst generating devices are arranged in a radial pattern so as to discharge a plasma torch toward the center of the exhaust gas duct.

In some embodiments, the device for fixing carbon dioxide in exhaust gas comprises two or more plasma catalyst generating devices, and the plasma catalyst generating devices are arranged diagonally in a sequential and staggered manner along the exhaust gas flow path of the exhaust gas duct.

In some embodiments, the device for fixing carbon dioxide in exhaust gas comprises two or more plasma catalyst generating devices, and the discharge unit penetrates the exhaust gas duct such that the plasma torch of the plasma catalyst generating device is discharged in a forward diagonal direction of the exhaust gas flow path of the exhaust gas duct.

### TECHNICAL EFFECTS

In accordance with the present disclosure, the method for fixing carbon dioxide using a plasma catalyst significantly improves energy efficiency compared to existing catalytic reaction methods and is applicable to large-volume exhaust gas processing. The alkali metal compound ionized in a plasma state effectively reacts with carbon dioxide to generate carbonate or bicarbonate, thereby fixing carbon dioxide in exhaust gas. In addition, by utilizing both steam plasma and oxygen plasma, it is possible to expect the effect of increasing the catalytic reaction rate and reducing harmful substances in exhaust gas. In particular, by using alkali metal hydroxides such as NaOH and KOH as catalysts, eco-friendly byproducts can be generated, and there is an advantage of being applicable to large-volume exhaust gas from a marine engine or the like.

### BRIEF DESCRIPTION OF DRAWINGS

FIG. 1 is a photograph of a plasma power monitor.
FIG. 2 is measurement data of exhaust gas before boiler operation, after boiler operation, and after plasma catalyst injection.
FIG. 3 is a schematic diagram illustrating the principle of a plasma catalyst for decarbonization.
FIG. 4 is a diagram of a carbon dioxide fixing system according to an embodiment of the present disclosure.
FIG. 5 is a schematic diagram illustrating a plasma catalyst generating device for capturing carbon dioxide in exhaust gas and a device for fixing carbon dioxide in exhaust gas comprising the same, according to an embodiment of the present disclosure.
FIG. 6 is a cross-sectional view of a plasma catalyst generating device for capturing carbon dioxide in exhaust gas according to an embodiment of the present disclosure.
FIG. 7 is a cross-sectional view of a device for fixing carbon dioxide in exhaust gas according to an embodiment of the present disclosure.
FIG. 8 is a cross-sectional view of a device for fixing carbon dioxide in exhaust gas according to an embodiment of the present disclosure.
FIG. 9 is a perspective view of a device for fixing carbon dioxide in exhaust gas according to an embodiment of the present disclosure.
FIG. 10 is a perspective view of a device for fixing carbon dioxide in exhaust gas according to an embodiment of the present disclosure.

### DETAILED DESCRIPTIONS

Hereinafter, embodiments of the present disclosure will be described in detail with reference to the accompanying drawings. Since the present disclosure can be modified in various ways and can take various forms, specific embodiments are illustrated in the drawings and described in detail herein. However, this is not intended to limit the present disclosure to any particular disclosed form, and should be understood to include all modifications, equivalents, and substitutes within the spirit and scope of the present disclosure. Like reference numerals are used for like elements throughout the description of the drawings. In the accompanying drawings, the dimensions of structures are shown in an enlarged scale relative to actual dimensions for clarity of the present disclosure.

The terminology used in the present application is used only to describe specific embodiments and is not intended to limit the present disclosure.

In addition, the description of one aspect of the present disclosure may be equally or similarly applied to identical or similar elements or terminology in the description of other aspects.

Unless otherwise defined, all terms used herein, including technical and scientific terms, have the same meanings as commonly understood by one of ordinary skill in the art to which the present disclosure belongs. Terms defined in commonly used dictionaries should be interpreted as having meanings consistent with the meanings they have in the context of the relevant art, and should not be interpreted in an idealized or overly formal sense unless explicitly defined in the present application.

Hereinafter, embodiments of the present disclosure will be described. However, the embodiments described below are merely some embodiments of the present disclosure, and the scope of the present disclosure is not limited to the following embodiments.

### Example 1

A simulation test was conducted with a minimum flow rate of 100,000 Nm³/hr for a marine engine.

### Preparation of Exhaust Gas Containing Carbon Dioxide

A CO₂ removal test was conducted using a plasma catalyst injection device to measure the CO₂ concentration in the exhaust gas of a boiler equipped with an LPG gas burner.

The gas consumption of the LPG burner is 295,000 kcal/hr, and calculating with a calorific value of LPG at 12,000 kcal/kg, approximately 24.6 kg/hr of gas is consumed. Dividing by the boiler efficiency of 87%, the total fuel consumption used in the boiler is approximately 28 kg/hr.

Calculating the amount of air required for complete combustion of LPG fuel:

C₃H₈ + 5O₂ → 3CO₂ + 4H₂O

In the above equation, the mass of propane (C₃H₈) is 44 g, and 160 g of oxygen is required for complete combustion; therefore, 102 kg of oxygen is required for complete combustion of 28 kg of LPG. Since 102 kg of oxygen is 3,182 mol and 1 mol is 22.4 L, a flow rate of 71,273 L of oxygen is required.

Assuming that the proportion of oxygen in air is 20% and calculating the combustion air volume, a theoretical air volume of 356.4 Nm³/hr is required, and since 1.3 times the supercharged air is generally introduced for safety, the total air volume is approximately 463 Nm³.

### Preparation of Plasma Catalyst

The frequency of the microwave plasma was 915 MHz, a power of 10 kW was applied, and the plasma diameter was approximately 100 mm and the length was approximately 600 mm.

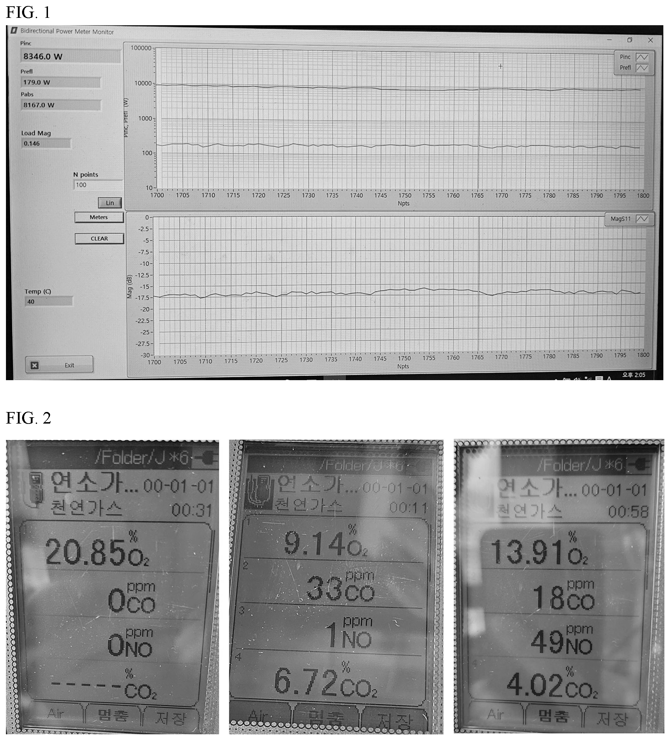

The plasma was discharged at a plasma power of 10 kW and O₂ at 150 LPM, and after discharge, steam was additionally supplied at approximately 25 kg/hr (33 Nm³/hr). FIG. 1 is a photograph of a plasma power monitor.

NaOH used as a catalyst was sprayed through a nozzle having a capacity of 60 L/hr as a 60% aqueous solution. The reaction equations of CO₂ and NaOH are as follows.

CO₂ + NaOH → NaHCO₃

CO₂ + NaOH → Na₂CO₃

According to the above reaction equations, CO₂ in the exhaust gas reacts with NaOH ionized by the plasma and is discharged as a byproduct.

### Results

The exhaust gas before boiler operation, after boiler operation, and after plasma catalyst injection was analyzed using a measuring instrument, and the results are as follows.

FIG. 2 is measurement data of exhaust gas before boiler operation, after boiler operation, and after plasma catalyst injection. The oxygen concentration before boiler operation was confirmed to be within the normal range at 20.85%. The CO₂ concentration in the exhaust gas after boiler operation was approximately 6.72%. Of the exhaust gas at 463 Nm³/hr, CO₂ was 31 Nm³/hr. The weight per mole of CO₂ is 44 g, and the weight of CO₂ in the exhaust gas was approximately 60.1 kg/hr.

The NaOH aqueous solution having a concentration of 60% was directly injected into the plasma through a nozzle at 60 L/hr, and the weight of NaOH at this time was 36 kg/hr.

After plasma catalyst injection, the CO₂ concentration in the exhaust gas was confirmed to have decreased by approximately 40% to 4.17%. In addition, the concentration of CO in the exhaust gas also decreased by 45%.

The increase in the concentrations of oxygen and NO in the exhaust gas is presumed to be due to the use of oxygen plasma, whereby unreacted oxygen reacted with nitrogen and oxygen in the exhaust gas to form synthesized compounds.

### Example 2

The experiment was conducted in the same manner as in Example 1 described above, except that a KOH aqueous solution was used as a catalyst. As a result, it was confirmed that byproducts such as KHCO₃ and K₂CO₃ were discharged and the CO₂ concentration in the exhaust gas decreased.

### Example 3

The experiment was conducted in the same manner as in Examples 1 and 2 described above, except that the plasma source gas was H₂O. As a result, it was confirmed that the CO₂ concentration in the exhaust gas decreased.

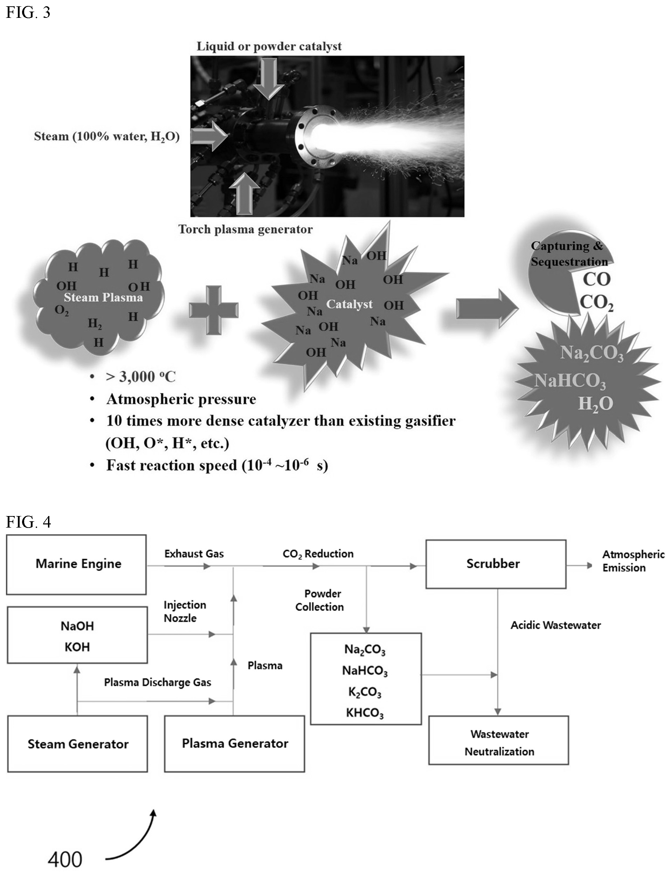

FIG. 3 is a schematic diagram illustrating the principle of a plasma catalyst for decarbonization.

FIG. 4 is a diagram (400) of a carbon dioxide fixing system according to an embodiment of the present disclosure. A system as shown in FIG. 4 can be implemented using the device or method according to an embodiment of the present disclosure.

Referring to FIG. 4, in order to fix carbon dioxide in the exhaust gas discharged from a marine engine, the plasma catalyst is discharged into the exhaust gas containing carbon dioxide. At this time, the plasma catalyst reacts with the carbon dioxide in the exhaust gas to fix the carbon dioxide in the exhaust gas. Through this reaction, the exhaust gas with reduced carbon dioxide is discharged into the atmosphere through a scrubber that removes NOx and SOx. In addition, byproducts such as Na₂CO₃, NaHCO₃, K₂CO₃, and KHCO₃ generated from the carbon dioxide fixing reaction, and NOx and SOx removed from the scrubber, are stored as wastewater and discharged separately.

Additionally, referring to FIG. 4, the plasma catalyst is formed by generating a plasma using steam as a discharge gas and injecting NaOH or KOH, which serves as a catalyst, into the plasma through steam.

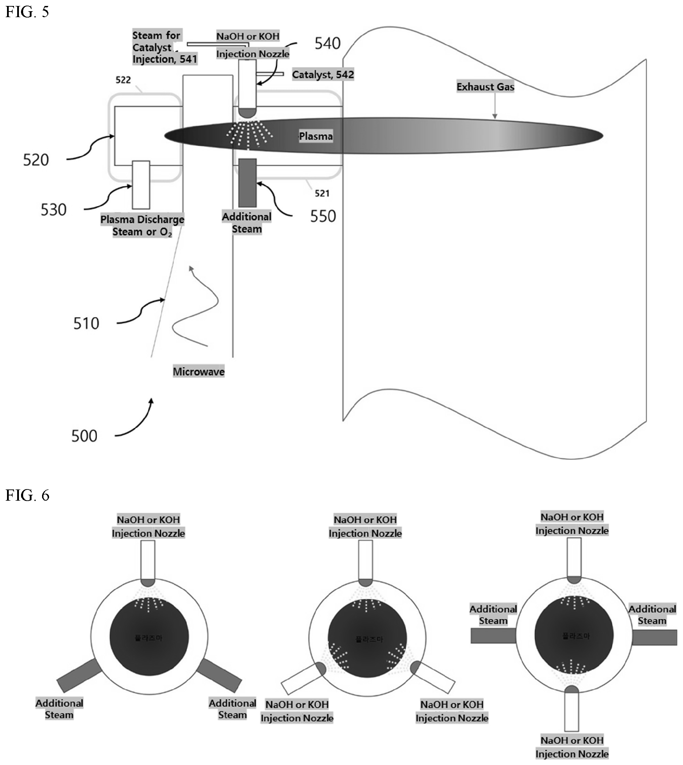

FIG. 5 is a schematic diagram illustrating a plasma catalyst generating device (500) for capturing carbon dioxide in exhaust gas and a device for fixing carbon dioxide in exhaust gas comprising the same, according to an embodiment of the present disclosure.

Referring to FIG. 5, the plasma catalyst generating device (500) for capturing carbon dioxide in exhaust gas comprises: a microwave waveguide (510) configured to transmit microwaves; a quartz discharge tube (520) penetrating the microwave waveguide (510), the quartz discharge tube (520) comprising a discharge outlet configured to form a plasma by the microwaves and to discharge a plasma torch; a discharge gas injection unit (530) configured to inject a plasma discharge gas into the quartz discharge tube (520), wherein the quartz discharge tube (520) comprises a discharge outlet side (521) on which the discharge outlet is located and a discharge gas injection side (522) opposite to the discharge outlet with the microwave waveguide (510) therebetween, and the discharge gas injection unit (530) is located on the discharge gas injection side (522); and an alkali metal compound injection unit (540) located on the discharge outlet side (521) and configured to inject an alkali metal compound into the plasma.

The plasma source gas injected into the discharge gas injection unit (530) is at least one of steam (H₂O) and oxygen.

The alkali metal compound injection unit (540) comprises a carrier gas injection line (541) and an alkali metal compound injection line (542) branched from the carrier gas injection line, so as to inject the alkali metal compound through a carrier gas. In this case, the carrier gas injected through the carrier gas injection line (541) is steam, and the steam as a carrier gas helps inject the alkali metal compound serving as a catalyst into the plasma. This is advantageous when the catalyst is in a solid state. The alkali metal compound injected through the alkali metal compound injection line (542) may be NaOH or KOH. Through this, NaOH and KOH serving as catalysts can be strongly injected with high-pressure steam to penetrate into the interior of the plasma.

At the discharge outlet side (521), at least one additional gas supply unit (550) is provided, the additional gas supply unit (550) being configured to supply a gas comprising steam to the plasma through the quartz discharge tube (520). The additionally supplied steam helps improve the reactivity of the carbon dioxide fixing reaction. In other words, it reacts with water and carbon dioxide in the exhaust gas to generate more OH radicals, and the more OH radicals facilitate the reaction of CO₂ with Na and K, thereby helping to fix carbon dioxide.

FIG. 6 is a cross-sectional view of a plasma catalyst generating device for capturing carbon dioxide in exhaust gas according to an embodiment of the present disclosure. Referring to FIG. 6, the catalyst is injected into the plasma and additional steam is introduced to improve reactivity, which is advantageous when the catalyst is in a solid state. When only a catalyst injection nozzle is applied (middle figure of FIG. 6), it is advantageous because a liquid-phase catalyst is dissolved in water and the aqueous solution itself can serve as steam. When a plurality of catalyst and steam injection nozzles are applied as shown in FIG. 6, this is a method of additionally introducing catalyst and steam when the CO₂ concentration in the exhaust gas is high or when reaction with more CO₂ is desired.

Referring to FIG. 5, the device for fixing carbon dioxide in exhaust gas comprises an exhaust gas duct through which an exhaust gas containing carbon dioxide passes, and the plasma catalyst generating device (500) for capturing carbon dioxide in exhaust gas as described above, wherein the discharge outlet penetrates the exhaust gas duct.

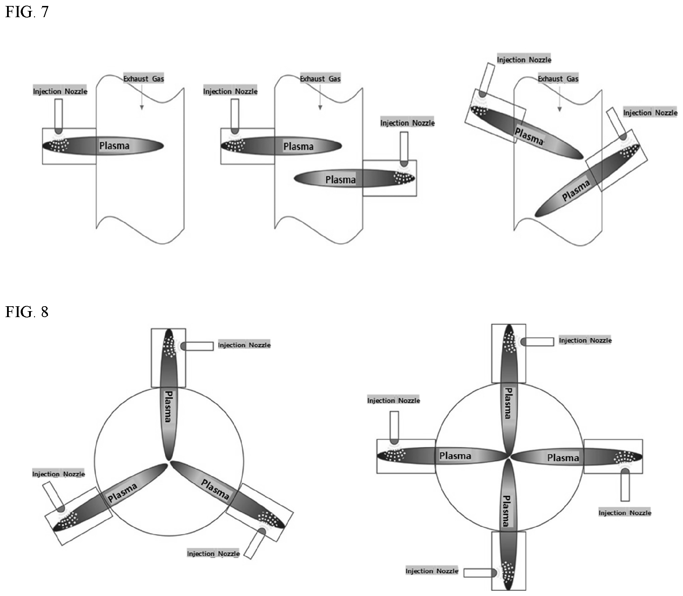

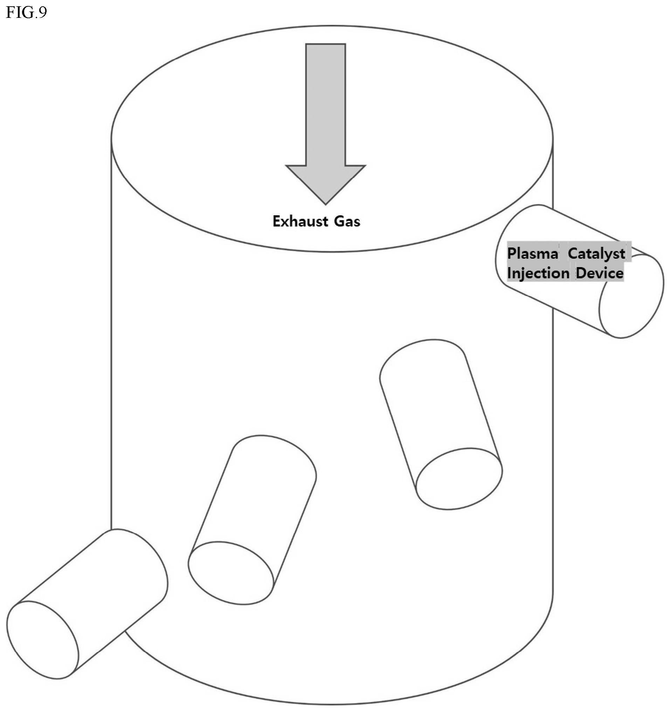

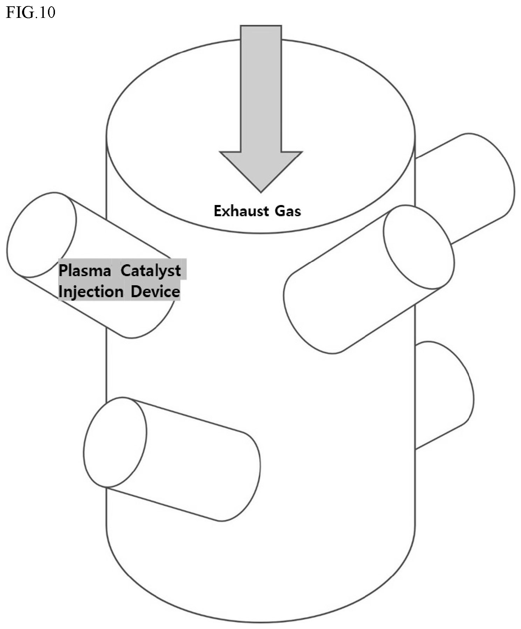

FIG. 7 is a cross-sectional view of a device for fixing carbon dioxide in exhaust gas according to an embodiment of the present disclosure. FIG. 8 is a cross-sectional view of a device for fixing carbon dioxide in exhaust gas according to an embodiment of the present disclosure. FIG. 9 is a perspective view of a device for fixing carbon dioxide in exhaust gas according to an embodiment of the present disclosure. FIG. 10 is a perspective view of a device for fixing carbon dioxide in exhaust gas according to an embodiment of the present disclosure.

One or more plasma catalyst generating devices may be arranged according to the flow rate of exhaust gas. When a plurality of plasma catalyst generating devices are included, the arrangement positions may be facing each other (left figure of FIG. 7), arranged diagonally in a sequential and staggered manner along the exhaust gas flow path of the exhaust gas duct (middle figure of FIG. 7, FIG. 9), or arranged such that the discharge unit penetrates the exhaust gas duct so that the plasma torch of the plasma catalyst generating device is discharged in a forward diagonal direction of the exhaust gas flow path of the exhaust gas duct (right figure of FIG. 7, FIG. 10).

Referring to FIG. 8, the device for fixing carbon dioxide in exhaust gas comprises two or more plasma catalyst generating devices, and the two or more plasma catalyst generating devices may be arranged in a radial pattern so as to discharge a plasma torch toward the center of the exhaust gas duct.

Referring to FIGS. 7 and 9, the device for fixing carbon dioxide in exhaust gas comprises two or more plasma catalyst generating devices, and the plasma catalyst generating devices may be arranged diagonally in a sequential and staggered manner along the exhaust gas flow path of the exhaust gas duct.

Referring to FIGS. 7 and 10, the device for fixing carbon dioxide in exhaust gas comprises two or more plasma catalyst generating devices, and the discharge unit may penetrate the exhaust gas duct such that the plasma torch of the plasma catalyst generating device is discharged in a forward diagonal direction of the exhaust gas flow path of the exhaust gas duct.

While the present disclosure has been described with reference to preferred embodiments, those skilled in the art will understand that various modifications and changes can be made to the present disclosure without departing from the spirit and scope of the present disclosure as set forth in the following claims.

## Claims

1. A method for fixing carbon dioxide in exhaust gas, the method comprising:
a first step of injecting an alkali metal compound into a plasma to form a plasma catalyst; and
a second step of discharging the plasma catalyst into an exhaust gas containing carbon dioxide to capture the carbon dioxide in the exhaust gas.

2. The method of claim 1, wherein the plasma is a microwave plasma torch in which a plasma source gas is injected into a discharge tube penetrating a microwave waveguide to generate a plasma discharge.

3. The method of claim 1, wherein the alkali metal compound is supplied in the form of a powder or an aqueous solution of a solid-phase or liquid-phase alkali metal compound.

4. The method of claim 1, wherein the alkali metal compound is an alkali metal hydroxide.

5. The method of claim 4, wherein the alkali metal hydroxide is at least one solid or aqueous solution selected from the group consisting of NaOH and KOH.

6. The method of claim 5, wherein the injection of the alkali metal compound is configured to be injected through a carrier gas.

7. The method of claim 6, wherein the carrier gas is steam.

8. The method of claim 1, wherein the plasma is a plasma of a plasma source gas comprising steam (H₂O).

9. The method of claim 8, wherein the plasma source gas further comprises oxygen (O₂).

10. The method of claim 1, wherein in the second step, a compound comprising a bicarbonate compound or a carbonate compound is formed.

11. The method of claim 10, wherein the bicarbonate compound or the carbonate compound is at least one selected from the group consisting of NaHCO₃, Na₂CO₃, KHCO₃, and K₂CO₃.

12. The method of claim 1, wherein the method fixes carbon dioxide contained in a large-volume exhaust gas from a marine engine or the like.

13. A plasma catalyst generating device for capturing carbon dioxide in exhaust gas, the device comprising:
a microwave waveguide configured to transmit microwaves;
a quartz discharge tube penetrating the microwave waveguide, the quartz discharge tube comprising a discharge outlet configured to form a plasma by the microwaves and to discharge a plasma torch;
a discharge gas injection unit configured to inject a plasma discharge gas into the quartz discharge tube, wherein the quartz discharge tube comprises a discharge outlet side on which the discharge outlet is located and a discharge gas injection side opposite to the discharge outlet with the microwave waveguide therebetween, and the discharge gas injection unit is located on the discharge gas injection side; and
an alkali metal compound injection unit located on the discharge outlet side and configured to inject an alkali metal compound into the plasma.

14. The plasma catalyst generating device of claim 13, wherein the plasma source gas comprises at least one of steam (H₂O) and oxygen.

15. The plasma catalyst generating device of claim 13, wherein the alkali metal compound injection unit comprises a carrier gas injection line and an alkali metal compound injection line branched from the carrier gas injection line, so as to inject the alkali metal compound through a carrier gas.

16. The plasma catalyst generating device of claim 15, wherein the carrier gas is steam.

17. The plasma catalyst generating device of claim 13, further comprising at least one additional gas supply unit configured to supply a gas comprising steam to the plasma through the quartz discharge tube on the discharge outlet side.

18. A device for fixing carbon dioxide in exhaust gas, the device comprising:
an exhaust gas duct through which an exhaust gas containing carbon dioxide passes; and
the plasma catalyst generating device for capturing carbon dioxide in exhaust gas of claim 13,
wherein the discharge outlet penetrates the exhaust gas duct.

19. The device of claim 18, wherein the device comprises two or more plasma catalyst generating devices, and the two or more plasma catalyst generating devices are arranged in a radial pattern so as to discharge a plasma torch toward the center of the exhaust gas duct.

20. The device of claim 18, wherein the device comprises two or more plasma catalyst generating devices, and the plasma catalyst generating devices are arranged diagonally in a sequential and staggered manner along the exhaust gas flow path of the exhaust gas duct.

21. The device of claim 18, wherein the device comprises two or more plasma catalyst generating devices, and the discharge unit penetrates the exhaust gas duct such that the plasma torch of the plasma catalyst generating device is discharged in a forward diagonal direction of the exhaust gas flow path of the exhaust gas duct.
